# EUROPEAN PATENT APPLICATION

(11) **EP 3 269 748 A1**
(43) Date of publication of application: **17.01.2018**
(21) Application number: 17180941.1
(22) Date of filing: 12.07.2017
(51) Int. Cl.: C08G 18/34, C08G 18/66, C08G 18/76, C08K 5/00, C08G 18/16, C08G 18/18, C08G 18/20, C08K 5/521, C08L 75/04, C08J 9/00

(54) **PROCESS FOR PRODUCING RIGID POLYMER FOAM**

(30) Priority: 13.07.2016 EP 16179196
(71) Applicant: BASF SE, 67056 Ludwigshafen am Rhein (DE)
(72) Inventor: Prissok, Frank, 49448 Lemförde (DE); Harms, Michael, 49356 Diepholz (DE); Koch, Sebastian, 49448 Lemförde (DE); Kampf, Gunnar, 32369 Rahden (DE)
(74) Representative: Herzog, Fiesser & Partner Patentanwälte PartG mbB

(57) **Abstract**

The present invention relates to a process for producing a rigid polymer foam comprising the steps of mixing at least one aromatic dicarboxylic acid and at least one phosphorous containing solvent to give a mixture (I); preparing a composition (A) comprising the mixture (I) and at least one Lewis base; and reacting composition (A) with at least one polyisocyanate component (B). The present invention further relates to the rigid polymer foam obtained or obtainable according to a process and the use of the rigid polymer foam as engineering material or for thermal insulation.

## Description

The present invention relates to a process for producing a rigid polymer foam comprising the steps of mixing at least one aromatic dicarboxylic acid and at least one phosphorous containing solvent to give a mixture (I); preparing a composition (A) comprising the mixture (I) and at least one Lewis base; and reacting composition (A) with at least one polyisocyanate component (B). The present invention further relates to the rigid polymer foam obtained or obtainable according to a process and the use of the rigid polymer foam as engineering material or for thermal insulation.

Polymer foams, such as polyurethane and polyurethane-polyurea foams based on di- or polyisocyanates are well known. Rigid polyurethane phases have a distinctly lower melting temperature compared with a rigid polyamide phase which has a decisive influence on using the materials at high temperatures.

It is further known to react carboxylic acids with isocyanates to form mixed carbamic anhydrides with partial further reaction to form amides. The reaction and the reaction mechanism are described for example by R. W. Hoffman in Synthesis 2001, No. 2, 243-246 and I. Scott in Tetrahedron Letters, Vol. 27, No. 11, pp 1251-1254, 1986.

Oligomeric compounds that use a reaction between a diisocyanate and a dicarboxylic acid are described by K. Onder in Rubber Chemistry and Technology, Vol. 59, pages 615-622 and by T. O. Ahn in Polymer Vol. 39, No. 2, pp. 459-456, 1998.

EP 0 527 613 A2 describes the production of foams comprising amide groups. These are produced using organic polyisocyanates and polyfunctional organic acids. The foams are produced using an addition reaction by reacting an organic polyisocyanate with the reaction product of a polyoxyalkylene and of an organic polycarboxylic acid component. The two isocyanate groups react with a compound which generates carbon dioxide. This compound is the reaction product of a polyoxyalkylene polyamine or of a polyol component with an organic polycarboxylic acid component. The polyoxyalkylenepolyamine or polyol component has an average molecular weight of 200 to 5000 g/mol. The starting temperature for the reaction is at least 150°C, while the reaction time is in a range from half an hour to twelve hours.

DE 42 02 758 A1 describes a foam comprising urethane and amide groups which is obtainable by using polyhydroxycarboxylic acids having a chain length of 8 to 200 carbon atoms. These polyhydroxycarboxylic acids are conveniently produced by ring-opening epoxidized unsaturated fatty acids with hydroxyl-containing compounds, such as water, alcohol or hydroxycarboxylic acids. Foam densities range from 33 to 190 kg/m³.

JP 2006-137870 A describes a process for producing a polyamide foam and the use of this polyamide foam. A polyisocyanate component and a polyester polycarboxylic acid component are made to react with each other using a phosphine oxide as catalyst. The reaction mixture is heated to 170°C at least.

WO 2013/127814 A1 discloses a process for producing a rigid polymer foam comprising reacting components A to C in the presence of component D or an isocyanate-functional prepolymer of components A and B with component C in the presence of component D, the total amount of which is 100 wt %, (A) 35 to 65 wt % of at least one polyisocyanate component A, (B) 5 to 50 wt % of at least one polyol component B, (C) 1 to 59 wt % of at least one polycarboxylic acid of component C, and (D) 0.01 to 3 wt % of at least one Lewis base component D, wherein the reaction takes place with release of carbon dioxide.

However, the known polyurethane-polyamide foams are disadvantageous because the starting materials either only react at comparatively high temperatures or do not react to completion, and their density is not in line with standard polyurethane recipes.

The present invention has for its object to provide rigid polymer foams that are dimensionally stable even at high temperatures in the presence of moisture and/or at high pressures. The rigid polymer foams shall further have advantageous properties with respect to sustained elasticity, abrasion resistance, tensile strength, tongue tear strength and compressive stresses. The present invention further has the object to provide a rigid polymer foam comprising polyamide groups obtainable by reaction of diisocyanate components with dicarboxylic acid components within a short time and preferably without the need for additional blowing agents.

According to the present invention this object has been solved by a process for producing a rigid polymer foam comprising the steps of
(i) mixing at least one aromatic dicarboxylic acid and at least one phosphorous containing solvent to give a mixture (I);
(ii) preparing a composition (A) comprising the mixture (I) and at least one Lewis base;
(iii) reacting composition (A) with at least one polyisocyanate component (B).

According to the present invention, least one aromatic dicarboxylic acid is mixed with at least one phosphorous containing solvent to give a mixture (I). This mixture is then used to prepare a composition (A) comprising the mixture (I) and at least one Lewis base. Finally, according to step (iii), composition (A) is reacted with at least one polyisocyanate component (B).

It has surprisingly been found that phosphorous containing solvents can be used to generate mixture (I) by mixing with the at least one aromatic dicarboxylic acid. This allows to prepare the composition (A) which can be reacted with at least one polyisocyanate component (B).

A rigid polymer foam is understood as meaning in the context of the present invention that, in the course of the production of the rigid polymer foam, the reaction mixture undergoes a volume change until the reaction has finally ended, even after the main reaction has ended, since the foam matrix is still viscous and the gas can continue to expand within the foam. It is advantageously possible for the polymer foam to include cells/cavities within the polymer foam and also on the surface of the polymer foam.

The process of the present invention involves the reaction of a carboxylic acid group with an isocyanate group to form a mixed carbamic anhydride which reacts further to form an amide. CO₂ elimination from the carbamic anhydrides using Lewis bases as catalysts provides the polymer foams at a similar rate to, for example, polymer foams based on polyurethane. Since this reaction releases the blowing gas from the components themselves, it can also be carried out in the absence of water and blowing agent.

The present invention utilizes the Lewis base component preferably as an accelerant or catalyst in the reaction, making it possible for the polyaddition and the polycondensation to be carried out uniformly and at a high rate to ensure that not only the molecular weight buildup and the gelling of the resulting polymer but also the expansive foaming, especially due to the released carbon dioxide, take place simultaneously so as to form a stable uniform foam which then solidifies. These problems are overcome in the process of the present invention, resulting in a rigid polymer foam having a uniform cellular distribution throughout the entire cross section of the rigid polymer foam.

According to the present invention, the process comprises steps (i), (ii) and (iii). According to step (i), at least one aromatic dicarboxylic acid and at least one phosphorous containing solvent are mixed.

Generally, any phosphorous containing solvent can be used according to the present invention. Suitable solvents are liquid at room temperature, i.e. at about 20°C, and preferably have a viscosity at 25°C below 200 mPas, more preferable below 100 mPas.

In particular, phosphorous containing esters are suitable solvents such as esters of phosphoric acid. Preferably, esters of phosphoric acid are used in the context of the present invention, more preferable esters of phosphoric acid which do not contain functional groups which are reactive towards isocyanates.

According to a further embodiment, the present invention is directed to a process as disclosed above, wherein the phosphorous containing solvent is selected from the group consisting of phosphorous containing esters.

Suitable phosphorous containing solvents are for example trialkylphosphates or chloroalkylphosphates such as for example triethylphosphate (TEP) or tri-2-chloroisopropylphosphate (TCPP).

According to a further embodiment, the present invention therefore is directed to a process as disclosed above, wherein the phosphorous containing solvent is selected from the group consisting of triethylphosphate (TEP) and tri-2-chloroisopropylphosphate (TCPP).

In principle, any aromatic dicarboxylic acid can be used in the context of the present invention.

Preferably, the aromatic dicarboxylic acid does not contain any hydroxyl groups in addition to the carboxyl groups. Examples of suitable aromatic dicarboxylic acids are phthalic acid, isophthalic acid, or terephthalic acid.

According to a further embodiment, the present invention is directed to a process as disclosed above, wherein the aromatic dicarboxylic acid is selected from the group consisting of phthalic acid, isophthalic acid and terephthalic acid.

In the context of the present invention, it is also possible to use the acid in the form of a salt as long as the salt is soluble under the reaction conditions. Suitable salts include sodium, potassium or ammonium salts of the respective dicarboxylic acid.

Mixture (I) can be a suspension or a solution, preferably a solution, in the context of the present invention.

According to a further embodiment, the present invention is directed to a process as disclosed above, wherein mixture (I) is a solution of the at least one aromatic dicarboxylic acid in the at least one phosphorous containing solvent.

Suitable reaction conditions for step (i), (ii), and (iii) are generally known to the person skilled in the art. It was found that it is particularly advantageous to prepare mixture (I) at a temperature in the range of from 15 to 150°C. Also steps (ii) and (iii) can be carried out at a temperature in the range of from 15 to 150°C.

According to the present invention, any of the steps of the process for producing a rigid polymer foam can be carried out at a starting temperature in the range from at least 15°C to at most 150°C, more preferably from at least preferably 15°C to at most 80°C, especially at a starting temperature from at least 25°C to at most 75°C and more preferably at a starting temperature from at least 30°C to at most 70°C The reaction of the abovementioned components can preferably take place at atmospheric pressure.

According to a further embodiment, the present invention is directed to a process as disclosed above, wherein step (i) is carried out at a temperature in the range of from 15 to 150°C.

The reactor and the reaction mixture generally are controlled to the temperature at which the reaction is started. The temperature can rise in the course of the reaction. Since the reaction is accelerated by the Lewis base component used in the process of the present invention in that the Lewis base acts as a catalyst, the process of the present invention provides complete and rapid further reaction between diisocyanate components and dicarboxylic acid components to form an amide component.

For the purposes of the present invention, at least one Lewis base component, may be understood as meaning a compound capable of providing electron pairs, for example in accordance with the meaning of the term "Lewis base" in chemistry. Preferably, the free electron pair is in a compound, but can also be bound to a metal or to an organometallic compound.

The Lewis base is preferably used in an amount of from 0.02 to 2 wt % and more preferably 0.05 to 1 wt %.

In a preferred embodiment of the process according to the present invention, the Lewis base component is selected from the group consisting of N-methylimidazole, melamine, guanidine, cyanuric acid, dicyandiamide or their derivatives. Ideally, the Lewis base is able to generate the formation of a carboxylate from the carboxylic acid, so that this carboxylate can quickly react with the diisocyanate component. The Lewis base likewise functions as a catalyst for the detachment of CO₂ in the reaction of the diisocyanate component with the dicarboxylic acid component. A synergistic effect may particularly advantageously result from the formation of the carboxylate and the detachment of CO₂ using the Lewis base, and so only one catalyst or accelerant is needed.

According to a further embodiment, the present invention is directed to a process as disclosed above, wherein the Lewis base is selected from the group consisting of consisting of N-methylimidazole, melamine, guanidine, cyanuric acid, dicyandiamide or their derivatives.

For the purposes of the present invention, at least one polyisocyanate component, herein also referred to as component B, comprises polyfunctional aromatic and/or aliphatic isocyanates, for example diisocyanates.

It may be advantageous for the polyisocyanate component to have an isocyanate group functionality in the range from 1.8 to 5.0, more preferably in the range from 1.9 to 3.5 and most preferably in the range from 2.0 to 3.0.

It is preferable for the suitable polyfunctional isocyanates to comprise on average from 2 to not more than 4 NCO groups. Examples of suitable isocyanates are 1,5-naphthylene diisocyanate, xylylene diisocyanate (XDI), tetramethylxylylene diisocyanate (TMXDI), diphenyldimethylmethane diisocyanate derivatives, di- and tetraalkyldiphenylmethane diisocyanate, 4,4-dibenzyl diisocyanate, 1,3-phenylene diisocyanate, 1,4-phenylene diisocyanate, the isomers of tolylene diisocyanate (TDI), optionally in admixture, 1-methyl-2,4-diisocyanatocyclohexane, 1,6-diisocyanato-2,2,4-trimethylhexane, 1,6-diisocyanato-2,4,4-trimethylhexane, 1-isocyanatomethyl-3-isocyanato-1,5,5-trimethylcyclohexane (IPDI), chlorinated and brominated diisocyanates, phosphorus-containing diisocyanates, 4,4-diisocyanatophenyl-perfluorethane, tetramethoxybutane 1,4-diisocyanate, butane 1,4-diisocyanate, hexane 1,6-diisocyanate (HDI), dicyclohexylmethane diisocyanate, cyclohexane 1,4-diiso-cyanate, ethylene diisocyanate, bisisocyanatoethyl phthalate, also polyisocyanates with reactive halogen atoms, such as 1-chloromethylphenyl 2,4-diisocyanate, 1-bromo-methylphenyl 2,6-diisocyanate, 3,3-bischloromethyl ether 4,4-diphenyl diisocyanate.

According to the present invention, aromatic isocyanates are preferably used. Therefore, according to a further embodiment, the present invention is directed to a process as disclosed above, wherein the polyisocyanate component is an aromatic polyisocyanate.

4,4-Diphenylmethane diisocyanate (MDI), hydrogenated MDI (H12MD1) and polymeric methylene diphenyl diisocyanate are particularly suitable and the polymeric methylene diphenyl diisocyanate advantageously has a functionality of not less than 2.2.

According to a further embodiment, the present invention is directed to a process as disclosed above, wherein the polyisocyanate is selected from the group of 4,4-diphenylmethane diisocyanate (MDI), and polymeric methylene diphenyl diisocyanate.

The process of the present invention involves the reaction of 30 to 70 wt % of at least one polyisocyanate component, preferably of 40 to 60 wt % of at least one polyisocyanate component and more preferably of 42 to 55 wt % of at least one polyisocyanate component, in particular at least one aromatic polyisocyanate.

According to the present invention, composition (A) may also comprise at least one further component with functional groups which are reactive towards isocyanate groups, such as for example compounds having two or more free hydroxyl groups. These compounds are preferably free of other functional groups or reactive groups, such as acid groups. Preferably, a polyol may be used, for example a polyether polyol or a polyester polyol. Examples thereof are a polyoxyalkylene, a polyoxyalkenyl, a polyester diol, a polyesterol, a polyether glycol, especially a polypropylene glycol, a polyethylene glycol, a polypropylene glycol, a polypropylene ethylene glycol, or mixtures thereof. A mixture can be understood as meaning for example a copolymer, but also a mixture of polymers.

The polyol may for example have an OH number of 10 mg KOH/g to 1000 mg KOH/g. More particularly, component B can have an OH number of 30 mg KOH/g to 500 mg KOH/g. According to a further embodiment, the present invention is directed to a process as disclosed above, wherein the composition (A) comprises at least one further component with functional groups which are reactive towards isocyanate groups.

It was further found that when the components are used in the amounts of the present invention, carbon dioxide formation is sufficient to produce a suitable rigid polymer foam, eliminating the need to add external blowing agents. When a foam of lower density is desired, however, external blowing agents can also be additionally used. It is preferable to dispense with the addition of external blowing agents. Similarly, in accordance with the present invention, any addition of water to the reaction mixture or the presence of water in the reaction mixture is avoided. The reaction is preferably carried out in the absence of water. Thus, preferably no water is present in the reaction mixture.

According to a further embodiment, the present invention is directed to a process as disclosed above, wherein no blowing agent is added in the process.

In the process of the present invention, a rigid polymer foam is obtained. Preferably, the reaction product of the process according to the present invention has a high density of amide bonds per polymer unit. This makes it possible to generate a rigid phase having advantageous properties. Amides have higher melting points and higher decomposition temperatures than urethanes. Rigid polymer foams having a higher proportion of aromatic amide bonds therefore likewise have a higher melting point and a higher decomposition temperature and hence are particularly suitable for high-temperature applications. The rigid polymer foams according to the present invention furthermore have a high stability towards chemicals and high mechanical stability.

Furthermore, the present invention is directed to a rigid polymer foam obtained or obtainable according to a process for producing a rigid polymer foam as disclosed above.

Thus, the present invention is directed to a rigid polymer foam obtained or obtainable according to a process for producing a rigid polymer foam comprising the steps of
(i) mixing at least one aromatic dicarboxylic acid and at least one phosphorous containing solvent to give a mixture (I);
(ii) preparing a composition (A) comprising the mixture (I) and at least one Lewis base;
(iii) reacting composition (A) with at least one polyisocyanate component (B).

With respect to the preferred compounds used and the reaction conditions, reference is made to the disclosure above.

The present invention is also directed to the use of a rigid polymer foam obtained or obtainable according to a process for producing a rigid polymer foam as disclosed above as engineering material or for thermal insulation.

The present invention includes the following embodiments, wherein these include the specific combinations of embodiments as indicated by the respective interdependencies defined therein.
1. Process for producing a rigid polymer foam comprising the steps of
   (i) mixing at least one aromatic dicarboxylic acid and at least one phosphorous containing solvent to give a mixture (I);
   (ii) preparing a composition (A) comprising the mixture (I) and at least one Lewis base;
   (iii) reacting composition (A) with at least one polyisocyanate component (B).
2. The process according to embodiment 1, wherein the phosphorous containing solvent is selected from the group consisting of phosphorous containing esters.
3. The process according to embodiment 1 or 2, wherein the phosphorous containing solvent is selected from the group consisting of triethylphosphate (TEP) and tri-2-chloroisopropylphosphate (TCPP).
4. The process according to any of embodiments 1 to 3, wherein the aromatic dicarboxylic acid is selected from the group consisting of phthalic acid, isophthalic acid and terephthalic acid.
5. The process according to any one of embodiments 1 to 4, wherein mixture (I) is a solution of the at least one aromatic dicarboxylic acid in the at least one phosphorous containing solvent.
6. The process according to any one of embodiments 1 to 5, wherein step (i) is carried out at a temperature in the range of from 15 to 150°C.
7. The process according to any one of embodiments 1 to 6, wherein the Lewis base is selected from the group consisting of consisting of N-methylimidazole, melamine, guanidine, cyanuric acid, dicyandiamide or their derivatives.
8. The process according to any one of embodiments 1 to 7, wherein the polyisocyanate component is an aromatic polyisocyanate.
9. The process according to any one of embodiments 1 to 8, wherein the polyisocyanate is selected from the group of 4,4-diphenylmethane diisocyanate (MDI), and polymeric methylene diphenyl diisocyanate.
10. The process according to any one of embodiments 1 to 9, wherein the composition (A) comprises at least one further component with functional groups which are reactive towards isocyanate groups.
11. The process according to any one of embodiments 1 to 10, wherein no blowing agent is added in the process.
12. A rigid polymer foam obtained or obtainable according to a process according to any one of embodiments 1 to 11.
13. Use of a rigid polymer foam obtained or obtainable according to a process according to anyone of embodiments 1 to 11 as engineering material or for thermal insulation.

Examples will be used below to illustrate the invention.

### EXAMPLES

### 1. Solubility of phthalic acid in triethylphosphate (TEP):

| Parts phthalic acid in TEP [%] | Solubility at varying temperature [°C] | | | | |
|---|---|---|---|---|---|
| | 150 | 80 | 60 | 40 | 22 |
| 5 | OK | OK | OK | OK | OK |
| 10 | OK | OK | OK | OK | OK |
| 20 | OK | OK | OK | OK | OK |
| 30 | OK | OK | OK | OK | OK |
| 40 | OK | OK | insoluble | - | - |
| 50 | insoluble | - | - | - | - |

### 2. General procedure

The following polyamide-polyurethanes were prepared according to table 1. Phthalic acid was dissolved in triethy phosphate. Subsequently, the mixture of the dicarboxylic acid was reacted with a diisocyanate.

The examples hereinbelow demonstrate the production and properties of rigid polymer foams. The materials of the present invention were produced in the lab using a blender.

Cubes with a volume of 11 l were foamed which were subsequently tested. The ratio of the starting materials is given in table 1. The results of the testing are summarized in tables 2 to 5.

**Table 1**

| | Ex. 1 | Ex. 2 | Ex. 3 | Ex. 4 | Comp. Ex. 1 | Comp. Ex. 2 | Comp. Ex. 3 |
|---|---|---|---|---|---|---|---|
| Acid 1 | 7.5 | 3.8 | 9.1 | 9.5 | | | |
| Acid 2 | | | | | | | 9.8 |
| Acid 3 | | | | | 0.6 | | |
| Polyol 1 | 3.8 | | 6.5 | 28.7 | | 7.5 | 28.7 |
| Polyol 2 | | | | | 18.3 | | |
| Polyol 3 | | | | | 5.7 | | |
| Polyol 4 | 3.2 | 3.3 | | | 3 | | |
| Polyol 5 | 16.5 | | 19.9 | | | 22.9 | |
| Polyol 6 | | | 1.9 | | | 2.2 | |
| Polyol 7 | | | 5.8 | | | 6.7 | |
| Polyol 8 | | 25.9 | | | | | |
| Iso 1 | 50 | 43.9 | 56 | 60.3 | | 58.3 | 61 |
| Iso 2 | | | | | 57.6 | | |
| stabilizer 1 | | 3.3 | | 0.8 | | | 0.4 |
| stabilizer 2 | | | | | 0.8 | | |
| stabilizer 3 | | | 0.1 | | | 0.2 | |
| stabilizer 4 | 0.7 | | 0.4 | | | 0.5 | |
| cat 1 | 0.4 | 0.3 | 0.1 | 0.7 | | 0.1 | 0.1 |
| cat 2 | | 0.9 | | | 0.9 | | |
| cat 3 | | 0.7 | | | 0.5 | | |
| cat 4 | | | 0.2 | | | 0.2 | |
| Blowing agent 1 | | 4.7 | | | 3.0 | | |
| Blowing agent 2 | | | | | | 1.5 | |
| Flame retardant 1 | | | | | 9.5 | | |
| Flame retardant 2 | 17.9 | 13.2 | | | | | |

### 2.1 Materials used

| | |
|---|---|
| Acid 1: | phthalic acid M=132g/mol |
| Acid 2: | pentanedioic acid M=132 g/mol |
| Acid 3: | 85 parts of formic acid in 15 parts of water |
| Polyol 1: | polypropylene glycol with average molecular weight (MW) 420 g/mol |
| Polyol 2: | polyester diol with average molar mass 600 g/l |
| Polyol 3: | polyester diol with average molar mass 510g/l |
| Polyol 4: | polyethylene glycol with average molecular weight (MW) 600 g/mol |
| Polyol 5: | polypropylene glycol with average molecular weight (MW) 500 g/mol |
| Polyol 6: | polypropylene glycol with average molecular weight (MW) 1040 g/mol |
| Polyol 7: | polypropylene glycol with average molecular weight (MW) 1070 g/mol |
| Polyol 8: | Polesterol with average molecular weight (MW) 564g/l |
| Flame retardant 1: | tri-2-chloroisopropyl phosphate |
| Flame retardant 2: | triethyl phosphate |
| blowing agent 1: | mixture of N-paraffinic hydrocarbons |
| blowing agent 2: | water |
| Iso 1: | polymeric methylenediphenylene diisocyanate having an average molar mass of 337 g/mol and a functionality of 2.7 |
| iso 2: | polymeric methylenediphenylene diisocyanate having an average molar mass of 362 g/mol and a functionality of 2.8 |
| stabilizer 1: | polyether-polysiloxane copolymer |
| stabilizer 2: | polyether-polydimethylsiloxane |
| stabilizer 3: | silicone-glycol copolymer |
| stabilizer 4: | polyether-polydimethylsiloxane copolymer |
| cat 1: | 1-methylimidazole |
| cat 2: | 30 parts of a bis(2-dimethylaminoethyl) ether in dipropylene glycol |
| cat 3: | 40 parts of potassium formate, 6 parts of water, 54 parts of monoethylene glycol |
| cat 4: | N, N-dimethylcyclohexylamine |

### 2.2 Example 1 (according to the invention)

31 parts of phthalic acid were dissolved in 74.1 parts of triethylphosphate at 150°C in a heating oven. This solution was cooled down to room temperature before it was admixed with 16 parts of polypropylene glycol having an MW of 420 g/mol, 68.4 parts of polypropylene glycol having an MW of 500 g/mol, 13.1 parts of polyethylene glycol having an MW of 600 g/mol, 2.9 parts of polyether-polysiloxane copolymer and 1.6 part of 1-methylimidazole. Addition of 207.7 parts of polymeric methylenediphenylene diisocyanate (iso 1) is followed by vigorous commixing with the lab stirrer for 10 s. Directly thereafter, the system was poured into a cube mold, where it underwent expansive foaming. Test specimens were taken from the polyamide-polyurethane foam thus produced and subjected to mechanical/thermal tests.

### 2.3 Example 2 (according to the invention)

23.2 parts of phthalic acid were dissolved in 80.3 parts of triethylphosphate at 150°C in a heating oven. This solution was cooled down to room temperature before it was admixed with 20 parts of polypropylene glycol having an MW of 600 g/mol, 157.7 parts of polyesterol having an MW of 564 g/mol, 20.1 parts of polyether-polysiloxane copolymer, 5.7 parts catalyst 2, 4.3 parts catalysat 3, 28.7 parts N-paraffinic hydrocarbons and 2 part of 1-methylimidazole.

Addition of 207.7 parts of polymeric methylenediphenylene diisocyanate (iso 1) is followed by vigorous commixing with the lab stirrer for 10 s. Directly thereafter, the system was poured into a cube mold, where it underwent expansive foaming. Test specimens were taken from the polyamide-polyurethane foam thus produced and subjected to mechanical/thermal tests.

### 2.4 Example 3 (according to the invention)

66.1 parts of phthalic acid were dissolved at above 150°C in a heating oven in 47.6 parts of polypropylene glycol having an MW of 420 g/mol, 145.3 parts of polypropylene glycol having an MW of 500 g/mol, 42.3 parts of polypropylene glycol having an MW of 1070 g/mol, 14 parts of polypropylene glycol having an MW of 1040 g/mol, 2.9 parts of polyether-polysiloxane copolymer and 0.5 part of 1-methylimidazole, 1,2 parts N, N-dimethylcyclohexylamine, and 1.1 parts silicone-glycol copolymer.

This solution was cooled down to 60°C and homogenized. Addition of 409.1 parts of polymeric methylenediphenylene diisocyanate (iso 1) is followed by vigorous commixing with the lab stirrer for 10 s. Directly thereafter, the system was poured into a cube mold, where it underwent expansive foaming. Test specimens were taken from the polyamide-polyurethane foam thus produced and subjected to mechanical/thermal tests.

### 2.5 Comparative Example 1

The components according to table 1 except the isocyanate were combined proportionately to give a mixture of 350 parts and homogenized.

Addition of 490 parts of isocyanate 2 is followed by vigorous commixing with the lab stirrer. Directly thereafter, the system was poured into a cube mold, where it underwent expansive foaming. Test specimens were taken from the polyamide-polyurethane foam thus produced and subjected to mechanical/thermal tests.

### 2.6 Comparative Example 2

The components according to table 1 except the isocyanate were combined proportionately to give a mixture of 400 parts and homogenized.

Addition of 680 parts of isocyanate 1 is followed by vigorous commixing with the lab stirrer. Directly thereafter, the system was poured into a cube mold, where it underwent expansive foaming. Test specimens were taken from the polyamide-polyurethane foam thus produced and subjected to mechanical/thermal tests.

### 2.7 Comparative example 3

54 parts of pentanedioic acid and 159 parts of polypropylene glycol having an MW of 420 g/mol were heated together at above 100°C in a heating oven until all the pentanedioic acid had melted. This acid-polyol mixture was then homogenized and cooled down to room temperature before it was admixed with 2.1 parts of polyether-polysiloxane copolymer and 0.7 part of 1-methylimidazole. Addition of 337 parts of polymeric methylenediphenylene diisocyanate is followed by vigorous commixing with the lab stirrer for 10 s. Directly thereafter, the system was poured into a cube mold, where it underwent expansive foaming. Test specimens were taken from the polyamide-polyurethane foam thus produced and subjected to mechanical/thermal tests.

### 3. Properties of the materials

The properties of the materials are summarized in tables 2 to 5.

**Table 2: Properties of the materials obtained**

| | | Ex.1 | Ex. 2 | Ex. 3 | Ex.4 | Comp. Ex 1 | Comp. Ex 2 | Comp. Ex. 3 |
|---|---|---|---|---|---|---|---|---|
| density | 109.9 | 65.7 | 49.3 | 58 | 45.9 | 48 | 46 | 44 |
| Compressive strength. | 1.197 | 0.372 | 0.08 | 0.45 | 0.314 | 0.12 | 0.31 | 0.25 |
| Relative deformation | 4.8 | 4.4 | 10 | 5.3 | 3.4 | 10 | 7.1 | 5.1 |
| E-Modul | 39.17 | 13.92 | 1.52 | 14.18 | 13.59 | | 8 | 8.29 |
| Tensile strenghth | 1 | 0.44 | - | 0.4 | 0.49 | | 0.32 | 0.4 |
| elasticity | 26.9 | 16.2 | - | 8.9 | 14.2 | | 8 | 11.8 |
| Flame heighth | >18 | >18 | 14.7 | >18 | >20 | | >18 | >20 |
| thermal conductivity. | - | 27.2 | 24.7 | 25.3 | 22.3 | 21.5 | 27 | 23.7 |
| closed-cell content | 89 | 94 | 68 | 90 | 88 | 92 | 90 | 91 |
| TGA | 181 | 182 | 131 | 264 | 247 | 214 | 276 | 265 |
| TMA | 112 | 75 | 57 | 70 | 105 | 139 | 90 | 77 |

**Table 3**

| | Ex.1 | Ex. 2 | Ex. 3 | Ex.4 | Comp. Ex1 | Comp. Ex. 3 |
|---|---|---|---|---|---|---|
| density | 65.7 | 49.3 | 58 | 46 | 48 | 44 |
| Compressive strength. | 0.372 | 0.08 | 0.45 | 0.314 | 0.12 | 0.25 |
| Relative deformation | 4.4 | 10 | 5.3 | 3.4 | 10 | 5.1 |

Table 2 reveals that the inventive examples featuring rigid foams in the same density range have a higher compressive strength. The relative deformation values are likewise better for the inventive foams

**Table 4**

| | Ex.1 | Ex. 2 | Ex. 3 | Ex.4 | Comp. Ex 2 | Comp. Ex. 3 |
|---|---|---|---|---|---|---|
| density | 65.7 | 49.3 | 58 | 46 | 39 | 44 |
| thermal conductivity. | 27.2 | 24.7 | 25.3 | 22 | 32 | 23.7 |
| closed-cell content | 94 | 68 | 90 | 88 | 92 | 91 |

The inventive foams have a lower thermal conductivity than rigid foams of comparable density and closed-cell content as shown in table 3.

**Table 5**

| | Ex.1 | Ex. 2 | Ex. 3 | Ex. 4 | Comp. Ex. 1 |
|---|---|---|---|---|---|
| density | 65.7 | 49.3 | 58 | 46 | 48 |
| closed-cell content. | 94 | 68 | 90 | 88 | 92 |
| TGA | 181 | 131 | 264 | 247 | 214 |

The inventive foams prove thermally more stable in thermogravimetric analysis than rigid foams of comparable density and closed-cell content.

### 4. Methods

density: core density [kg/m³]
compressive strength in N/mm² according to DIN 53421/ DIN EN ISO 604
relative deformation[%]according to DIN 53421 /DIN EN ISO 604
thermal conductivity [mW/m*K], measured with Hesto A50 (mean temp. 23°C) [
closed-cell content[%]according to DIN ISO 4590
TGA: thermogravimetric analysis [°C] to DIN EN ISO 11358, evaluated on absolute value, basis at 95% of starting sample mass

## Claims

1. Process for producing a rigid polymer foam comprising the steps of
(i) mixing at least one aromatic dicarboxylic acid and at least one phosphorous containing solvent to give a mixture (I);
(ii) preparing a composition (A) comprising the mixture (I) and at least one Lewis base;
(iii) reacting composition (A) with at least one polyisocyanate component (B).

2. The process according to claim 1, wherein the phosphorous containing solvent is selected from the group consisting of phosphorous containing esters.

3. The process according to claim 1 or 2, wherein the phosphorous containing solvent is selected from the group consisting of triethylphosphate (TEP) and tri-2-chloroisopropylphosphate (TCPP).

4. The process according to any of claims 1 to 3, wherein the aromatic dicarboxylic acid is selected from the group consisting of phthalic acid, isophthalic acid and terephthalic acid.

5. The process according to any one of claims 1 to 4, wherein mixture (I) is a solution of the at least one aromatic dicarboxylic acid in the at least one phosphorous containing solvent.

6. The process according to any one of claims 1 to 5, wherein step (i) is carried out at a temperature in the range of from 15 to 150°C.

7. The process according to any one of claims 1 to 6, wherein the Lewis base is selected from the group consisting of consisting of N-methylimidazole, melamine, guanidine, cyanuric acid, dicyandiamide or their derivatives.

8. The process according to any one of claims 1 to 7, wherein the polyisocyanate component is an aromatic polyisocyanate.

9. The process according to any one of claims 1 to 8, wherein the polyisocyanate is selected from the group of 4,4-diphenylmethane diisocyanate (MDI), and polymeric methylene diphenyl diisocyanate.

10. The process according to any one of claims 1 to 9, wherein the composition (A) comprises at least one further component with functional groups which are reactive towards isocyanate groups.

11. The process according to any one of claims 1 to 10, wherein no blowing agent is added in the process.

12. A rigid polymer foam obtained or obtainable according to a process according to any one of claims 1 to 11.

13. Use of a rigid polymer foam obtained or obtainable according to a process according to any one of claims 1 to 11 as engineering material or for thermal insulation.
